# EUROPEAN PATENT APPLICATION

(11) **EP 4 013 002 A1**
(43) Date of publication of application: **15.06.2022**
(21) Application number: 20852347.2
(22) Date of filing: 04.08.2020
(51) Int. Cl.: H04L 29/06, H04L 9/32

(54) **SOFTWARE PACKAGE TRANSMISSION METHOD, SOFTWARE PACKAGE TRANSMISSION VERIFICATION METHOD, NETWORK DEVICE, AND STORAGE MEDIUM**

(30) Priority: 09.08.2019 CN 201910735753
(71) Applicant: ZTE Corporation, Shenzhen, Guangdong 518057 (CN)
(72) Inventor: LIANG, Lin, Shenzhen, Guangdong 518057 (CN); MU, Dongdong, Shenzhen, Guangdong 518057 (CN)
(74) Representative: Canzler & Bergmeier Patentanwälte Partnerschaft mbB
(86) International application number: PCT/CN2020/106758
(87) International publication number: WO 2021/027622

(57) **Abstract**

Provided in embodiments of the present disclosure are a software package transmission method, a software package transmission verification method, a network device, and a storage medium. The software package transmission verification method comprises using first-level signing by a server for a first-level software package and first-level signature verification by a first-level receive end for the first-level software package to detect whether the first-level software package has been tampered with during transmission from the server to the first-level receive end, and verifying and confirming the integrity and security of the entire first-level software package. While ensuring the integrity and security of the first-level software package, each second-level software package among the first-level software package is transmitted to a corresponding second-level receive end. On the basis of second-level signing by the server for a second-level software package and second-level signature verification by a second-level receive end for the second-level software package, it is detected whether the second-level software package has been tampered with during transmission from the first-level receive end to the second-level receive end, and the integrity and security of the entire second-level software package are verified and confirmed, thus preventing the second-level receive end from being attacked by a malicious attacker from using a second-level software package that has been tampered with, and improving the security of the software package receive end.

## Description

### TECHNICALFIELD

The present disclosure relates to the field of communications, and in particular to a software package transmission method, a software package transmission verification method, a network device, and a storage medium.

### BACKGROUND

With development of the mobile communication technology, the communication technology has entered the 5th Generation (5G) era. Regarding 5G radio access network (RAN) architectures, the 3rd Generation Partnership Project (3GPP) passes a centralized unit/distributed unit (CU/DU) architecture scheme, in which 5G makes the hardware capability be not limiting through a virtualization technology, and CU software can be flexibly deployed to meet requirements of various scenarios and applications well.

After CU software is released by a software manufacturer, a CU software package is to be transmitted to a data center, and then a software sub-package in the CU software package is transmitted to a corresponding network element device to be deployed by the network element device. During transmission from a server of the manufacturer (i.e., manufacturer server) to the data center and then to the network element device, there is a risk that the CU software package may be tampered with. Once a software package that is tampered with is installed at a receiving end, a huge security risk is brought to the receiving end.

### SUMMARY

An embodiment of the present disclosure provides a software package transmission method, including:
performing, by a server, second-level signing on second-level software packages belonging to a same first-level software package, where the first-level software package includes at least two second-level software packages, and the second-level software packages in the first-level software package belong to different second-level receiving ends;
performing, by the server, first-level signing on the first-level software package; and
sending, from the server, the first-level software package to a first-level receiving end.

An embodiment of the present disclosure further provides a software package transmission verification method, including:
receiving, by a first-level receiving end, a first-level software package sent from a server;
performing, by the first-level receiving end, first-level signature verification on the first-level software package; and
transmitting, by the first-level receiving end, each second-level software package in the first-level software package to a corresponding second-level receiving end, after the first-level software package passes the signature verification.

An embodiment of the present disclosure further provides a software package transmission verification method, including:
receiving, by a second-level receiving end, a second-level software package sent from a first-level receiving end, where the first-level receiving end is configured to perform first-level signature verification on a first-level software package from a server and including the second-level software package; and
performing, by the second-level receiving end, second-level signature verification on the second-level software package.

An embodiment of the present disclosure further provides a network device, including a processor, a memory, and a communication bus; where
the communication bus is configured to enable a communicative connection between the processor and the memory; and
the processor is configured to execute a software package transmission program stored in the memory to implement operations of the software package transmission method as described above; or, the processor is configured to execute a first software package transmission verification program stored in the memory to implement operations of the software package transmission verification method at the first-level receiving end as described above; or, the processor is configured to execute a second software package transmission verification program stored in the memory to implement operations of the software package transmission verification method at the second-level receiving end as described above.

An embodiment of the present disclosure further provides a storage medium storing at least one of a software package transmission program, a first software package transmission verification program, or a second software package transmission verification program therein, where the software package transmission program is executable by one or more processors to cause operations of the software package transmission method as described above to be implemented; the first software package transmission verification program is executable by one or more processors to cause operations of the software package transmission verification method at the first-level receiving end as described above to be implemented; and the second software package transmission verification program is executable by one or more processors to cause operations of the software package transmission verification method at the second-level receiving end as described above to be implemented.

Additional features and corresponding beneficial effects of the present disclosure are set forth in the following description, and it is to be understood that at least part of the beneficial effects will become obvious from the description of the present disclosure.

### BRIEF DESCRIPTION OF DRAWINGS

FIG. 1 is a flowchart of a software package transmission method according to an embodiment of the present disclosure;
FIG. 2 is a schematic diagram of software package transmission in an embodiment of the present disclosure;
FIG. 3 is a schematic diagram of software package transmission in an embodiment of the present disclosure;
FIG. 4 is a flowchart of a software package transmission verification method at a first-level receiving end according to an embodiment of the present disclosure;
FIG. 5 is a flowchart of a software package transmission verification method at a second-level receiving end according to an embodiment of the present disclosure;
FIG. 6 is an interaction flowchart of a software package transmission verification scheme according to an embodiment of the present disclosure; and
FIG. 7 is a schematic diagram of hardware configuration of a network device according to an embodiment of the present disclosure.

### DETAIL DESCRIPTION OF EMBODIMENTS

For clarity and better understanding of technical solutions and advantages of the present disclosure, embodiments of the present disclosure will be described in detail below with reference to specific implementations and accompanying drawings. It will be appreciated that the specific implementations described herein are merely for illustration of the present disclosure and are not intended to limit the present disclosure.

In some examples of the existing art, a receiving end typically uses a cyclic redundancy check (CRC) method or a digest check method to determine whether a CU software package is complete.

Taking the CRC method being used as an example, when sending a software package to the receiving end, the transmitting end calculates and determines a CRC check code corresponding to the software package, and then the CRC check code is sent to the receiving end along with the software package. After receiving the software package, the receiving end calculates the corresponding CRC check code according to the software package, and compares the calculated CRC check code with the CRC check code sent along with the software package to determine whether they are consistent. If the calculated CRC check code is consistent with the CRC check code sent along with the software package, it is determined that the software package is not tampered with during transmission; If the calculated CRC check code is not consistent with the CRC check code sent along with the software package, it is determined that the software package is incomplete and unsafe.

Similarly, when the digest check method is used, a transmitting end calculates a digest of a software package by a message-digest algorithm MD5 or any other algorithm, and then sends the digest to the receiving end along with the software package. If a digest calculated by the receiving end after receiving the software package is consistent with the digest sent along with the software package, it indicates that the software package is not tampered with; if the digest calculated by the receiving end after receiving the software package is not consistent with the digest sent along with the software package, it indicates that the software package is tampered with.

However, if the software package is intercepted by a malicious attacker, it is very possible for the malicious attacker to further change the corresponding CRC check code or digest after tampering with the software package, so that the receiving end cannot find the fact that the software package is tampered with according to the CRC check code or digest in the software package, thereby affecting security at the receiving end. Therefore, the result obtained by the CRC method or the digest check method may be inaccurate.

In some examples, a verification method based on public and private keys is further proposed, in such verification method, when sending a software package, a transmitting end uses a private key to sign the software package, and sends the signed software package to a receiving end. After receiving the software package, the receiving end uses a public key to perform signature verification on the software package, and if the software package passes the signature verification, it indicates that the software package is safe; if the software package fails to pass the signature verification, the software package is not safe.

In a scenario of distributed units, after the software package arrives at a data center from a server of a manufacturer (i.e., manufacturer server), the data center further transmits software sub-packages in the software package to network element devices, respectively, so that the network element devices install the software sub-packages. In this scenario, the data center is a "first-level receiving end", and each of the network element devices is a "second-level receiving end". The first-level receiving end receives the software package from the transmitting end and sends the software sub-packages in the software package to second-level receiving ends, and the second-level receiving ends receive the software sub-packages from the first-level receiving end.

It will be appreciated that, according to the verification method based on public and private keys as described above, the data center may check integrity of the software package sent from the manufacturer server to determine whether the software package is safe, but during the process of sending the software sub-packages from the data center to the network element devices, the software sub-packages may also be attacked and tampered with, while the network element devices have no way of determining whether the received software sub-packages are safe.

In view of the above problems, embodiments of the present disclosure provide a software package transmission verification scheme, including a software package transmission method applied to a server, a software package transmission verification method applied to a first-level receiving end, and a software package transmission verification method applied to a second-level receiving end.

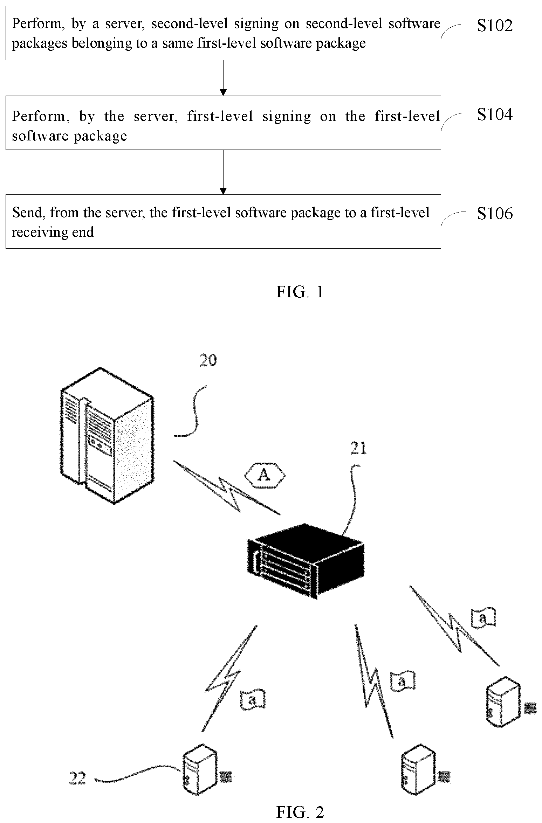

FIG. 1 shows a flowchart of a software package transmission method according to an embodiment of the present disclosure. As shown in FIG. 1, the software package transmission method includes operations S102, S104, and S106.

At S102, performing, by a server, second-level signing on second-level software packages belonging to a same first-level software package.

In the embodiment, the first-level software package is a general software package sent from the server to the first-level receiving end, and the first-level software package may include at least two second-level software packages, and different second-level software packages may be sent to different second-level receiving ends. Referring to FIG. 2 which shows a schematic diagram of software package transmission among the server, the first-level receiving end, and the second-level receiving end, a first-level software package A is transmitted between a server 20 and a first-level receiving end 21, and second-level software packages a are transmitted between the first-level receiving end 21 and second-level receiving ends 22. Three second-level receiving ends 22 are shown in FIG. 2, and the three second-level receiving ends 22 receive second-level software packages belonging to a same first-level software package.

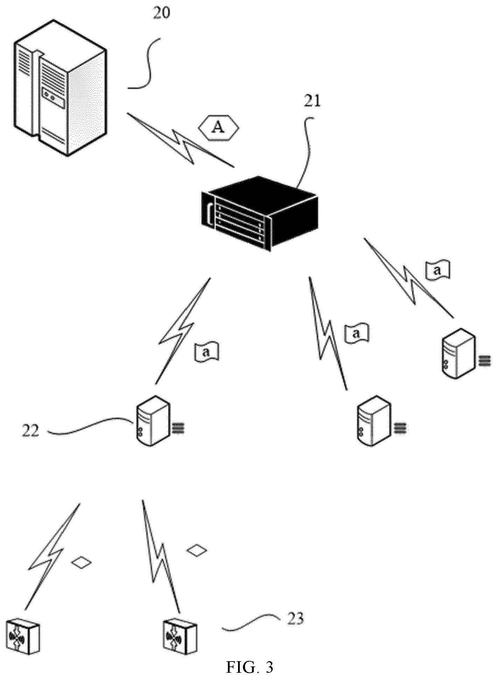

In some examples, the second-level software package is the minimum unit of software package, and cannot be further split. However, in some examples, a second-level software package may further include at least two third-level software packages that may be sent from the second-level receiving end to third-level receiving ends. Referring to the schematic diagram shown in FIG. 3, after the server 20 sends the first-level software package A to the first-level receiving end 21, the first-level receiving end 21 obtains second-level software packages from the first-level software package A, and then sends the second-level software packages to the second-level receiving ends 22. After receiving the second-level software package, each second-level receiving end 22 may obtain at least two third-level software packages from the second-level software packages, and then send the third-level software packages to third-level receiving ends 23, respectively.

It will be appreciated that the first-level software package may be split into n levels of software packages, where an (n-1)^{th} level software package may include at least two n^{th} level software packages. In a normal case, n may take a value of 2, but in a 5G communication system, the value of n may be changed from 2 to 3. However, those skilled in the art will appreciate that n may take a greater value as desired by the communication system.

In some examples, the server may perform second-level signing on the second-level software package based on a second-level private key. Each second-level private key has a corresponding second-level public key. In a normal case, if the server performs signing on the second-level software package directly based on a second-level private key, and the second-level receiving end correspondingly uses a second-level public key to perform signature verification on the received second-level software package, key management for the second-level private key and the second-level public key is desired.

In order to reduce a burden caused by the key management, in some examples, the server may sign on each second-level software package with a second CA certificate based on the second-level private key. Therefore, for the second-level receiving end, merely signature verification using a second CA certificate corresponding to the second-level public key is to be performed on the received second-level software package.

It will be appreciated that if a second-level software package includes third-level software packages, the server should firstly perform third-level signing on each third level software package belonging to the second-level software package before performing second-level signing on the second-level software package. Similarly, if a third level software package includes fourth-level software packages, the server should firstly perform fourth-level signing on each fourth-level software package belonging to the third level software package.

The third-level signing, the fourth-level signing, ......, the n^{th} level signing on the software package each may also be performed by using a corresponding level private key, or using a CA certificate based on the corresponding level private key.

At S104, performing, by the server, first-level signing on the first-level software package.

After performing second-level signing on each second-level software package belonging to the same first-level software package, the server may package the second-level software packages into a first-level software package, and then perform first-level signing on the first-level software package.

In some examples, the server may perform first-level signing on the first-level software package based on a first-level private key. Each first-level private key has a corresponding first-level public key. In a normal case, if the server performs signing on the first-level software package directly based on a first-level private key, and the first-level receiving end uses a first-level public key to perform signature verification on the received first-level software package, key management of the first-level private key and the first-level public key is desired.

Also, to reduce the burden caused by the key management, in some examples, the server may sign on each first-level software package with a first CA certificate based on the first-level private key. Therefore, for the first-level receiving end, merely signature verification with a first CA certificate corresponding to the first-level public key is to be performed on the received first-level software package.

It should be noted that, although the first CA certificate may be a root CA certificate and the second CA certificate may be a second-level CA certificate under the root CA certificate, actually, the "first CA certificate" refers to a CA certificate that can be used to sign a first-level software package, and the "second CA certificate" refers to a CA certificate that can be used to sign a second-level software package. Therefore, in the embodiment, the first CA certificate and the second CA certificate do not necessarily have a relationship of "parent" and "child". It is even not necessarily that the first CA certificate is a root CA certificate. Therefore, in some examples, the first CA certificate and the second CA certificate may be two CAs of a same level without a relationship of "parent" and "child". In some examples, the first CA certificate and the second CA certificate may be a parent CA certificate and a child CA certificate respectively, but not a root CA certificate and a second-level CA certificate respecti vel y.

At S106, sending, from the server, the first-level software package to a first-level receiving end.

After completing the first-level signing on the first-level software package, the server may send the first-level software package to a first-level receiving end.

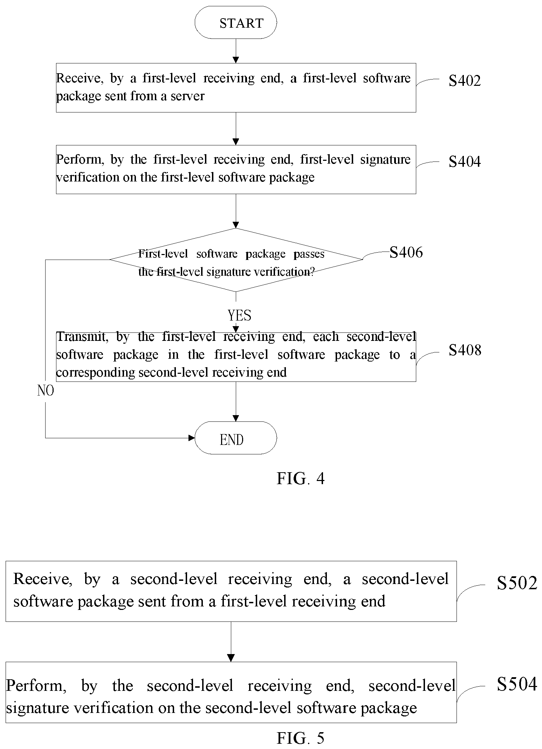

FIG. 4 shows a software package transmission verification method applied to a first-level receiving end. As shown in FIG. 4, the software package transmission verification method includes operations S402, S404, S406 and S408.

At S402, receiving, by a first-level receiving end, a first-level software package sent from a server.

In some examples, the first-level receiving end may be a data center. In some examples, the first-level receiving end may be a network management system. Those skilled in the art will appreciate that the first-level receiving end is not limited to these two types, and any other network devices is also possible.

At S404, performing, by the first-level receiving end, first-level signature verification on the first-level software package.

The first-level software package sent from the server to the first-level receiving end has experienced first-level signing, and thus, after the first-level receiving end receives the first-level software package, first-level signature verification may be performed on the first-level software package to determine whether the first-level software package is complete.

If the server performs the first-level signing on the first-level software package directly based on a first-level private key, the first-level receiving end naturally performs signature verification on the first-level software package based on a first-level public key corresponding to the first-level private key. If the server performs the first-level signing on the first-level software package through a first CA certificate based on the first-level private key, the first-level receiving end naturally performs signature verification on the first-level software package by using a first CA certificate based on the first-level public key.

In some examples, a first CA certificate may be pre-configured in the first-level receiving end. However, in more examples, because the device of the first-level receiving end and the software package belong to different manufacturers, the first-level receiving end obtains the first CA certificate from a CA server before performing the first-level signature verification on the first-level software package.

At S406, judging whether the first-level software package passes the first-level signature verification.

If it is judged that the first-level software package passes the first-level signature verification, it proceeds to operation S408; if it is judged that the first-level software package fails to pass the first-level signature verification, the flow is ended. It will be appreciated that if the first-level software package fails to pass the first-level signature verification, it indicates that the first-level software package is tampered with during transmission from the server to the first-level receiving end, and the first-level software package is no longer secure and complete and thus is not suitable for being sent to a next-level receiving end.

At S408, transmitting, by the first-level receiving end, each second-level software package in the first-level software package to a corresponding second-level receiving end.

After the first-level software package passes the first-level signature verification, the first-level receiving end may extract second-level software packages from the first-level software package, and then send the second-level software packages to the corresponding second-level receiving ends, respectively. In an example, the first-level receiving end is a data center, and receives a first-level software package including second-level software packages a, b, and c to be sent to second-level receiving ends, i.e., base stations Ng1, Ng2, and Ng3, respectively, and thus, the data center may send a second-level software package a to Ng1, a second-level software package b to Ng2, and a second-level software package c to Ng3.

FIG. 5 shows a software package transmission verification method applied to a second-level receiving end. As shown in FIG. 5, the software package transmission verification method includes operations S502 and S504.

At S502, receiving, by a second-level receiving end, a second-level software package sent from a first-level receiving end.

In the embodiment, the second-level receiving end may include a network element device, such as a base station. After the first-level software package passes the first-level signature verification, the first-level receiving end sends the second-level software packages in the first-level software package to the corresponding second-level receiving ends, respectively. Therefore, for each second-level receiving end, it receives a second-level software package sent from the first-level receiving end after the first-level software package passes the first-level signature verification.

At S504, performing, by the second-level receiving end, second-level signature verification on the second-level software package.

After receiving the second-level software package, the second-level receiving end may perform second-level signature verification on the second-level software package to determine whether the second-level software package is complete.

If the server performs the second-level signing on the second-level software package directly based on a second-level private key, the second-level receiving end naturally performs second-level signature verification on the second-level software package based on a second-level public key corresponding to the second-level private key. If the server performs the second-level signing on the second-level software package through a second CA certificate based on the second-level private key, the second-level receiving end naturally performs second-level signature verification on the second-level software package by using a second CA certificate based on the second-level public key.

In some examples, the second-level receiving end may obtain the second CA certificate from the CA server. However, considering that there are a relatively large number of second-level receiving ends, for example, when base stations serve as the second-level receiving ends, the number of the second-level receiving ends is huge, and thus the second CA certificate may be pre-configured in each second-level receiving end when the second-level receiving end leaves the factory, so that the process of obtaining the second CA certificate from the CA server by a large number of second-level receiving ends can be omitted.

It will be appreciated that, similar to the first-level signature verification on the first-level software package by the first-level receiving end, the second-level signature verification may also lead to two results, including: the second-level software package passing the second-level signature verification, or the second-level software package failing to pass the second-level signature verification. If the second-level software package fails to pass the second-level signature verification, it indicates that the second-level software package is tampered with during transmission from the first-level receiving end to the second-level receiving end. If the second-level software package passes the second-level signature verification by the second-level receiving end, it indicates that the second-level software package is safe and complete.

In some examples, the second-level software package is the minimum unit of software package, and thus, when the second-level receiving end determines that the second-level software package passes the second-level signature verification, the second-level software package may be installed.

In some other examples, the second-level software package further includes third-level software packages, and thus, when the second-level receiving end determines that the second-level software package passes the second-level signature verification, the third-level software packages in each second-level software package are transmitted to third-level receiving ends which perform third-level signature verification on the third-level software packages. It will be appreciated that the third-level receiving end processes the third-level software package in a manner similar to the manner in which the second-level receiving end processes the second-level software package, which is not repeated here.

In the software package transmission verification scheme according to the embodiment of the present disclosure, there is proposed a two-level or multi-level signing/signature verification mechanism, in which a corresponding level signing is performed on lower-level software packages by a server, then the signed lower-level software packages are packed to form an upper-level software package, and a corresponding level signing is further performed on the upper-level software package, and finally a first-level software package is sent to a first-level receiving end which performs first-level signature verification on the first-level software package, and after the first-level software package passes the signature verification, the lower-level software packages therein are transmitted to lower-level receiving ends which perform signature verification on the lower-level software packages, and so on and so forth. In this manner, the integrity and security of the software packages at each transmission stage are verified, thereby improving security at the receiving end.

In the embodiment of the present disclosure, it is assumed that there are merely receiving ends of two levels, and here, a case where a network management system serves as the first-level receiving end, and a base station serves as the second-level receiving end is taken as an example for continue explanation of the foregoing software package transmission verification scheme, so as to clarify advantages and details of the scheme.

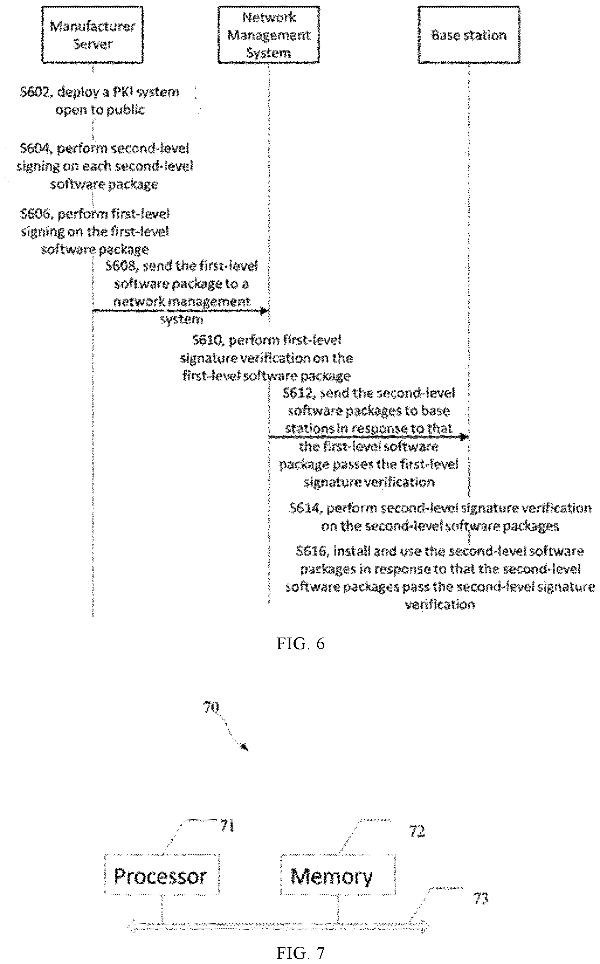

FIG. 6 shows an interaction flowchart of a software package transmission verification scheme according to an embodiment of the present disclosure. As shown in FIG. 6, the software package transmission verification scheme includes operations S602 to S616.

At S602, deploying a public key infrastructure (PKI) system open to public at a server of a manufacturer (i.e., manufacturer server).

The PKI system includes a CA system, a certificate revocation list (CRL) system, or the like, and is configured to preload a second CA certificate for a base station to implement functions such as first-level signing on a first-level software package and second-level signing on a second-level software package.

The manufacturer in the embodiment refers to a manufacturer of the software package, or a manufacturer of the base station.

At S604, performing, by the manufacturer server, second-level signing on each second-level software package via the PKI system.

The PKI system at the manufacturer server may perform signing on the second-level software package through a second CA certificate, and after completing the second-level signing on all second-level software packages, the manufacturer server may pack all second-level software packages into a first-level software package.

At S606, performing, by the manufacturer server, first-level signing on the first-level software package via the PKI system.

The PKI system at the manufacturer server may perform signing on the first-level software package through a first CA certificate.

At S608, sending, from the manufacturer server, the first-level software package to a network management system.

At S610, performing, by the network management system, first-level signature verification on the first-level software package.

Before performing first-level signature verification on the first-level software package, the network management system may acquire the first CA certificate through a public channel, and then perform first-level signature verification on the first-level software package through the first CA certificate.

At S612, sending, by the network management system, the second-level software packages to base stations in response to that the first-level software package passes the first-level signature verification.

It will be appreciated that there are a plurality of base stations serving as second-level receiving ends, FIG. 6 merely shows a flow of the network management system sending a second-level software package to one of the base stations, and for the flows of receiving and processing a second-level software package by another base station, reference may be made to the corresponding flow of the base station shown.

At S614, performing, by the base stations, second-level signature verification on the second-level software packages.

In the embodiment, when a base station leaves the factory, the PKI system at the manufacturer server has already pre-configured the CA certificate in the base station. The certificate pre-configured in the base station may be limited to the second CA certificate, but in some examples, there may be three types of CA certificates at the manufacturer server, and in such case, all the three types of CA certificates may be pre-configured in the base station before the base station leaves the factory. The second-level software package may carry a signature file, according to signature file, the base station can determine which type of CA certificate is used as a basis for signing on the second-level software package, and thus can select the corresponding CA certificate for the second-level signature verification on the received second-level software package.

At S616, installing the second-level software packages by the base stations for usage in response to that the second-level software packages pass the second-level signature verification.

If a second-level software package passes the second-level signature verification of a base station, it indicates that the second-level software package is not tampered with during transmission from the network management system to the base station, and the second-level software package is complete and safe, so the base station can use the second-level software package normally.

In the software package transmission verification scheme according to the embodiment of the present disclosure, two times of signing on the whole software package is performed at a side of the manufacturer server based on a two-level signing mechanism, after the first-level software package is transmitted from the manufacturer server to the network management system, the network management system may verify a signature of the first-level software package (i.e., perform signature verification on the first-level software package), and determine whether the first-level software package is tampered with during transmission from the manufacturer server to the network management system according to a result of the signature verification. If the first-level software package is not tampered with, the network management system may send the second-level software packages therein to base stations, and the base stations can perform second-level signature verification on the second-level software packages to determine whether the second-level software packages are tampered with during transmission from the network management system to the base stations, thereby determining whether the second-level software packages are safety and useful and thus improving security at the base stations.

An embodiment of the present disclosure further provides a storage medium on which one or more computer programs, that are readable, compliable and executed by one or more processors, may be stored. In the embodiment, The storage medium may store at least one of a software package transmission program, a first software package transmission verification program, or a second software package transmission verification program therein. The software package transmission program is executable by one or more processors to cause the flow of the software package transmission method as described above to be implemented, the first software package transmission verification program is executable by one or more processors to cause the flow of the software package transmission verification method at the first-level receiving end as described above to be implemented; and the second software package transmission verification program is executable by one or more processors to cause the flow of the software package transmission verification method at the second-level receiving end as described above to be implemented.

In addition, an embodiment of the present disclosure provides a network device. As shown in FIG. 7, the network device 70 includes a processor 71, a memory 72, and a communication bus 73 configured to connect the processor 71 and the memory 72. The memory 72 may be the storage medium storing therein at least one of the software package transmission program, the first software package transmission verification program, or the second software package transmission verification program as described above.

In some examples, the network device 70 is a server, and the processor 71 may read and compile the software package transmission program, and execute the flow of the software package transmission method as described above, including performing second-level signing on second-level software packages belonging to a same first-level software package, then performing first-level signing on the first-level software package, and sending the first-level software package to the first-level receiving end.

In some examples, each second-level software package includes at least two third-level software packages, and before the second-level signing is performed on second-level software packages belonging to a same first-level software package, third-level signing is firstly performed on the third-level software packages belonging to a same second-level software package.

In some examples, the first-level signing includes signing a first certificate authority (CA) signature based on a first-level private key. Similarly, the second-level signing may include signing a second CA signature based on a second-level private key.

In some examples, the network device 70 may be a first-level receiving end, such as a network management system or a data center, and the processor 71 may read and compile the first software package transmission verification program, and execute the flow of the software package transmission verification method at the first-level receiving end as described above, including receiving a first-level software package sent from a server, then performing first-level signature verification on the first-level software package, and transmitting, after the first-level software package passes the signature verification, each second-level software package in the first-level software package to a corresponding second-level receiving end.

If the first-level signing performed by the server on the first-level software package includes signing a first certificate authority (CA) signature based on a first-level private key, when the first-level signature verification on the first-level software package is performed, a first CA certificate based on a first-level public key may be used to perform the signature verification on the first-level software package. The first-level public key corresponds to the first-level private key.

In some examples, before using the first CA certificate based on the first-level public key to perform signature verification on the first-level software package, the first CA certificate is to be acquired from a CA server and installed.

In some examples, the network device 70 may be a second-level receiving end, such as a base station, and the processor 71 may read and compile the second software package transmission verification program, and execute the flow of the software package transmission verification method at the second-level receiving end as described above, including receiving a second-level software package sent from a first-level receiving end, and then performing second-level signature verification on the second-level software package.

In a case where the second-level software package includes at least two third-level software packages, if the second-level software package, subjected to second-level signature verification, passes the signature verification, each third-level software package in the second-level software package is transmitted to a corresponding third-level receiving end.

In a case where the second-level software package is the minimum unit of software package, if the second-level software package, subjected to second-level signature verification, passes the signature verification, the second-level software package may be installed.

If the second-level signing performed by the server on the second-level software package includes signing a second CA signature based on a second-level private key, when the second-level signature verification on the second-level software package is performed, a second CA certificate based on a second-level public key may be used to perform the signature verification on the second-level software package. The second-level public key corresponds to the second-level private key.

In some examples, the network device 70 is pre-configured with the second CA certificate before leaving the factory. Therefore, there is no need to temporarily acquire the second CA certificate before performing the second-level signature verification on the second-level software package.

The network device according to the embodiment of the present disclosure proposes a two-level or multi-level signing/signature verification mechanism, in which the software packages at each transmission stage can be verified to check whether the software packages are tampered with during transmission, and to determine the integrity and security of the software packages at each transmission stage, thereby improving security at the receiving end.

It will be appreciated that contents of embodiments of the present disclosure may be used in combination without conflict.

Apparently, those skilled in the art will appreciate that all or some operations of the above described method, functional modules/units in the system and apparatus may be implemented as software (which may be implemented by program codes executable by a computing device), firmware, hardware, and suitable combinations thereof. In a hardware implementation, the division between the functional modules/units mentioned in the above description does not necessarily correspond to the division of physical components; for example, one physical component may have multiple functions, or one function or operation may be performed cooperatively by several physical components. Some or all physical components may be implemented as software executed by a processor, such as a CPU, a digital signal processor or microprocessor, or implemented as hardware, or implemented as an integrated circuit, such as an application specific integrated circuit. Such software may be distributed on a computer-readable medium which may include a computer storage medium (or non-transitory medium) and a communication medium (or transitory medium), or may be executed by a computing device, and in some cases, may execute the operations shown or described in a different order other than herein. As is well known to those of ordinary skill in the art, the term computer storage medium includes volatile and nonvolatile, removable and non-removable medium implemented in any method or technology for storing information, such as computer-readable instructions, data structures, program modules or other data. The computer storage medium includes, but is not limited to, an RAM, an ROM, an EEPROM, a flash memory, a CD-ROM, a digital versatile disc (DVD), an optical disc, a magnetic cartridge, a magnetic tape, or any other media which can be used to store the desired information and accessed by a computer. Moreover, it is well known to those ordinary skilled in the art that a communication medium typically includes a computer-readable instruction, a data structure, a program module, or other data in a modulated data signal, such as a carrier wave or other transport mechanism, and may include any information delivery medium. In this way, the present disclosure is not restricted to any particular hardware and software combination.

The above are further detailed explanation of the embodiments of the present disclosure in conjunction with specific implementations, and the present disclosure is not to be construed as being limited to these implementations. For those ordinary skilled in the art to which the present disclosure pertains, several simple deductions or substitutions can be made without departing from the concept of the present disclosure, such deductions and substitutions should also be considered as falling within the scope of the present disclosure.

## Claims

1. A software package transmission method, comprising:
performing, by a server, second-level signing on second-level software packages belonging to a same first-level software package, wherein the first-level software package comprises at least two second-level software packages, and the second-level software packages in the first-level software package belong to different second-level receiving ends;
performing, by the server, first-level signing on the first-level software package; and
sending, from the server, the first-level software package to a first-level receiving end.

2. The software package transmission method according to claim 1, wherein each second-level software package comprises at least two third-level software packages, and before performing, by the server, second-level signing on the second-level software packages belonging to the same first-level software package, the method further comprises:
performing, by the server, third-level signing on the third-level software packages belonging to a same second-level software packages.

3. The software package transmission method according to claim 1 or 2, wherein the first-level signing comprises signing a first certificate authority (CA) signature based on a first-level private key.

4. The software package transmission method according to claim 1 or 2, wherein the second-level signing comprises signing a second CA signature based on a second-level private key.

5. A software package transmission verification method, comprising:
receiving, by a first-level receiving end, a first-level software package sent from a server;
performing, by the first-level receiving end, first-level signature verification on the first-level software package; and
transmitting, by the first-level receiving end, each second-level software package in the first-level software package to a corresponding second-level receiving end, after the first-level software package passes the signature verification.

6. The software package transmission verification method according to claim 5, wherein the first-level signing performed by the server on the first-level software package comprises signing a first certificate authority (CA) signature based on a first-level private key, the first-level signature verification performed by the first-level receiving end on the first-level software package comprises:
using, by the first-level receiving end, a first CA certificate based on a first-level public key to perform signature verification on the first-level software package, the first-level public key corresponding to the first-level private key.

7. The software package transmission verification method according to claim 6, wherein before using, by the first-level receiving end, the first CA certificate based on the first-level public key to perform signature verification on the first-level software package, the method further comprises:
acquiring and installing, by the first-level receiving end, the first CA certificate from a CA server.

8. The software package transmission verification method according to any one of claims 5 to 7, wherein the first-level receiving end is a data center or a network management system, and the second-level receiving end is a network element device.

9. A software package transmission verification method, comprising:
receiving, by a second-level receiving end, a second-level software package sent from a first-level receiving end, wherein the first-level receiving end is configured to perform first-level signature verification on a first-level software package from a server and comprising the second-level software package; and
performing, by the second-level receiving end, second-level signature verification on the second-level software package.

10. The software package transmission verification method according to claim 9, wherein the second-level software package comprises at least two third-level software packages, and after performing, by the second-level receiving end, the second-level signature verification on the second-level software package, the method further comprises:
transmitting, by the second-level receiving end, each third-level software package in the second-level software package to a corresponding third-level receiving end in response to that the second-level software package passes the signature verification.

11. The software package transmission verification method according to claim 9, wherein after performing, by the second-level receiving end, the second-level signature verification on the second-level software package, the method further comprises:
installing the second-level software package by the second-level receiving end in response to that the second-level software package passes the signature verification.

12. The software package transmission verification method according to any one of claims 9 to 11, wherein the second-level signing performed by the server on the second-level software package comprises signing a second CA signature based on a second-level private key, and the second-level signature verification performed by the second-level receiving end on the second-level software package comprises:
using, by the second-level receiving end, a second-level CA certificate based on a second-level public key to perform signature verification on the second-level software package, the second-level public key corresponding to the second-level private key.

13. The software package transmission verification method according to claim 12, wherein the second-level receiving end is pre-configured with the second CA certificate before leaving a factory.

14. A network device, comprising a processor, a memory, and a communication bus; wherein
the communication bus is configured to enable a communicative connection between the processor and the memory; and
the processor is configured to execute a software package transmission program stored in the memory to implement operations of the software package transmission method according to any one of claims 1 to 4; or, the processor is configured to execute a first software package transmission verification program stored in the memory to implement operations of the software package transmission verification method according to any one of claims 5 to 8; or, the processor is configured to execute a second software package transmission verification program stored in the memory to implement operations of the software package transmission verification method according to any one of claims 9 to 13.

15. A storage medium, storing therein at least one of a software package transmission program, a first software package transmission verification program, or a second software package transmission verification program, wherein the software package transmission program is executable by one or more processors to cause operations of the software package transmission method according to any one of claims 1 to 4 to be implemented; the first software package transmission verification program is executable by one or more processors to cause operations of the software package transmission verification method according to any one of claims 5 to 8 to be implemented; and the second software package transmission verification program is executable by one or more processors to cause operations of the software package transmission verification method according to any one of claims 9 to 13 to be implemented.
